# NEUE EUROPÄISCHE PATENTSCHRIFT

(11) **EP 1 911 824 B2**
(45) Veröffentlichungstag und Bekanntmachung des Hinweises auf die Entscheidung über den Einspruch: **20.08.2014**
(45) Hinweis auf die Patenterteilung: 17.11.2010
(21) Anmeldenummer: 07113426.6
(22) Anmeldetag: 30.07.2007
(51) Int. Cl.: C09J 7/04, B60R 16/02, B32B 5/26, H01B 7/18

(54) **Kabelwickelband, insbesondere für den Motorenraum eines Automobils**
Cable wrapping tape, in particular for the motor area of an automobile
Bande d'enroulement de câble, en particulier pour l'espace du moteur d'une automobile

(30) Priorität: 11.10.2006 DE 202006015702 U; 21.10.2006 DE 202006016438 U
(43) Veröffentlichungstag der Anmeldung: 16.04.2008
(73) Patentinhaber: Coroplast Fritz Müller GmbH & Co. KG, 42279 Wuppertal (DE)
(72) Erfinder: Frigge, Christoph, 45549 Sprockhövel (DE); Lodde, Christoph, 44229 Dortmund (DE)
(74) Vertreter: Patentanwälte Dr. Solf & Zapf

(56) Entgegenhaltungen:
- EP-A2- 2 151 484
- WO-A-99/50943
- WO-A-2005/085379
- WO-A1-00/20201
- DE-A1- 10 042 732
- DE-A1- 10 149 975
- DE-U1-202004 019 761
- DE-U1-202005 013 009

## Beschreibung

Die Erfindung betrifft ein Kabelwickelband, insbesondere für den Motorenraum eines Automobils, mit einem bandförmigen, als Verbund aus mindestens einer ersten textilen Schicht und aus einer zweiten textilen Schicht ausgebildeten Träger, wobei die zweite textile Schicht ein Vliesstoff ist, und mit mindestens auf einer Seite des Trägers aufgetragenen selbstklebenden Klebeschicht, die aus einem Haftklebstoff besteht.

Kabelsätze werden, insbesondere im Automobilbereich, gewöhnlich mit Klebebändern umwickelt. Neben der reinen Bündelungsfunktion haben dabei vor allem textile Klebebänder mittlerweile zahlreiche Zusatzfunktionen, wie den Schutz der Leitungen vor Abrieb oder die Dämpfung von Klapper- oder Vibrationsgeräuschen, übernommen. Weit verbreitet ist dabei der Einsatz von Gewebeklebebändern aus Zellwolle oder von Polyester (PET) und von Veloursbändern aus Polyester sowie aus Polyamid und auch von verschiedenen, meist ebenfalls auf Polyester basierenden Vliesklebebändern.

Die Prüfung von Klebebändern für die Bewicklung von Kabelsätzen erfolgt in der Automobilindustrie zumeist nach umfangreichen Normenwerken, wie sie z. B. in der LV 312 "Klebebänder für Kabelsätze in Kraftfahrzeugen" (1/2005) als gemeinsame Prüfrichtlinie der Firmen Audi, BMW, DC und VW zusammengefasst sind.

Hinsichtlich der Abriebbeständigkeit ist in der LV 312 die in der nachstehenden Tabelle 1 wiedergegebene Klassifizierung vorgesehen.

**Tabelle 1: Einteilung der Abriebklassen nach LV 312**

| Abriebklasse | Anforderung (Anzahl Hübe) |
|---|---|
| A - kein Abriebschutz | < 100 |
| B - geringer Abriebschutz | 100 - 499 |
| C - mittlerer Abriebschutz | 500 - 999 |
| D - hoher Abriebschutz | 1000 - 4999 |
| E - sehr hoher Abriebschutz | 5000 und mehr |

Als weitere anwendungstechnisch wichtige Prüfungen sind in dieser Richtlinie beispielsweise auch Prüfmethoden für thermische Beständigkeit, die Kompatibilität von Klebebändern mit elektrischen Fahrzeugleitungen sowie für die Chemikalienbeständigkeit, das Geräuschdämpfungsverhalten und das Fogging-Verhalten beschrieben.

Ein bekanntes Klebeband der eingangs genannten Art, das sich nach einer Prüfung in seinem Eigenschaftsbild als der Klasse E entsprechend erwies, ist in der DE 298 23 462 U1 (Anmelder: Hänsel Verbundtechnik GmbH & Co. KG) beschrieben. Die DE 298 23 462 U1 betrifft eine Schutzummantelung, die aus einem inneren Faservlies und aus einem äußeren Velours besteht. Das bekannte Band ist nicht maschinell verarbeitbar und zeigt am Kabelsatz ein Flagging, so dass seine Enden jeweils beim Einsatz fixiert werden müssen. So ergeben sich nachteiligerweise neben einem relativ hohen Fertigungsaufwand, der mit der Bildung der Veloursschicht verbunden ist, auch hohe Verarbeitungszeiten.

Ein weiteres bekanntes, im Handel befindliches hochabriebfestes Klebeband ist das der Firma FFA Automotive AG, bei dem es sich ebenfalls um ein Verbundmaterial handelt, und zwar um ein Verbundmaterial aus einem PA-Velours und einer PET-Folie.

Aus der WO 2005/085379 A1 ist bekannt, dass mit herkömmlichen Gewebekonstruktionen von 40 bis 50 Fäden pro cm in Kettrichtung sowie 20 bis 30 Fäden in Schussrichtung mittlere Abriebfestigkeiten von 1000 Hüben (Klasse D) gemäß der Norm ISO 6722 (Dorndurchmesser 10 mm, 10 N, Auflagegewicht, 0,45 mm Stahldraht) erreicht werden. Das Dokument vermittelt dabei die Lehre, dass mit einem speziell verbundenen, aus mehreren Lagen bestehenden Trägersystem für ein Klebeband eine Gesamtabriebfestigkeit erreicht werden kann, die höher liegt als die Summe der Abriebfestigkeiten von Klebebändern mit Trägem, die aus den Einzellagen bestehen. Dabei beschreibt die WO 2005/085379 A1 unter anderem ein Kabelwickelband für Automobile, das einen bandförmigen, als Verbund aus mindestens einer ersten textilen Schicht und aus einer zweiten textilen Schicht ausgebildeten Träger aufweist, wobei die erste textile Schicht ein Gewebe und die zweite textile Schicht ein Vliesstoff ist und wobei auf einer Seite des Trägers eine selbstklebende Klebeschicht aufgetragen ist, die aus einem Haftklebstoff besteht. In einer Ausführungsform ist das Vlies der zweiten textilen Schicht ein Nähvlies mit einem Flächengewicht von 310 g/m², wobei die beiden textilen Schichten durch kreuzweises Übemähen miteinander verbunden sind. Konkret handelt es sich um eine Kombination eines speziellen Maliwatt-Vliesstoffes (PET-Stapelfasern, Dicke 0,75 mm, Feinheit 28, Typ "Cross stiched-bonded fabric") mit einem speziellen Gewebe (Flächengewicht 100 g/m², Schuss 30 mesh, Kette 45 mesh). Das bekannte Kabelwickelband weist nach ISO 6722 bei einer Gewichtsbelastung von 10 N eine Abriebfestigkeit von über 8000 Doppelhüben auf. Dieser Wert entspricht der Klasse D der Abriebklassen nach LV 312 für einen 5-mm-Dorn.

Der vorliegenden Erfindung liegt die Aufgabe zu Grunde, ein in der Herstellung und bei der Montage wenig aufwändiges Kabelwickelband zu schaffen, das die genannten Nachteile des bekannten Standes der Technik überwindet. Insbesondere soll ein erfindungsgemäßes Klebeband dabei Höchstwerte der Abriebfestigkeit aufweisen. Darüber hinaus soll dabei das erfindungsgemäße Klebeband auch weitere Anforderungen der vorstehend genannten Prüfrichtlinie LV 312 erfüllen, eine hohe Schmiegsamkeit aufweisen und sowohl manuell als auch maschinell verarbeitbar sein.

Diese Aufgabe wird mit einem Klebeband gemäß Anspruch 1 gelöst.

Es hat sich gezeigt, dass es bei diesem erfindungsgemäßen Trägeraufbau unter Vermeidung des Vorhandenseins einer Veloursschicht möglich ist, ein Kabelwickelband mit höchster Abriebfestigkeit herzustellen. Das erfindungsgemäße Kabelwickelband zeichnet sich dabei durch einen verringerten Fertigungsaufwand und kürzere Verarbeitungszeiten aus als das vorstehend erwähnte bekannte Band.

Was die Klebstoffbeschichtung betrifft, so können als druckempfindliche Haftklebstoffe vorzugsweise Acrylatklebstoffe, insbesondere UV-vernetzbare Acrylatklebstoffe, aber auch Synthese- und auch Naturkautschukklebstoffe eingesetzt werden. Klebebänder mit Acrylatklebstoffen zeichnen sich durch niedrige Foggingwerte, eine hohe Resistenz gegen verschiedene Chemikalieneinflüsse und durch eine ausgezeichnete Kompatibilität mit verschiedenen Leitungen aus.

Um die bei der spiralförmigen Bewicklung von Kabelsätzen erforderlichen Haftwerte auf dem Bandrücken von vorzugsweise 4 bis 7 N/cm zu erreichen, wird vorteilhafterweise mit Auftragsgewichten der Klebstoffbeschichtung von 60 bis 150 g/m², vorzugsweise von 95 bis 105 g/m², gearbeitet.

Erfindungsgemäß wird auch ein Acrylatklebstoff, insbesondere ein UV-vernetzbarer Acrylatklebstoff, zur Kaschierung der ersten textilen Trägerschicht auf die zweite textile Trägerschicht eingesetzt..

In einem Nähvlies ist das Vliesmaterial durch eine Vielzahl parallel zueinander verlaufender, eingenähter Nähte verfestigt, so dass sich eine Oberfläche aus Tälern und Erhebungen von Naht zu Naht ergibt.

Hierbei ist es besonders vorteilhaft, wenn in dem Nähvlies der zweiten textilen Schicht das Garn eine Garnstärke von 50 bis 100 dtex aufweist und ebenso auch, wenn in dem Nähvlies eine Anzahl von 7 bis 22 Fäden je 25 mm, vorzugsweise von 14 Fäden je 25 mm, vorgesehen ist. Dies führt zu einer zwar schmiegsamen, jedoch besonders abriebfesten Trägerstruktur.

Weitere vorteilhafte Ausführungen der Erfindung sind in den Unteransprüchen und der nachfolgenden speziellen Beschreibung enthalten. Anhand eines Ausführungsbeispiels und mehrerer Vergleichsbeispiele wird unter Bezugnahme auf die Zeichnung die Erfindung dabei näher erläutert. Dabei zeigt

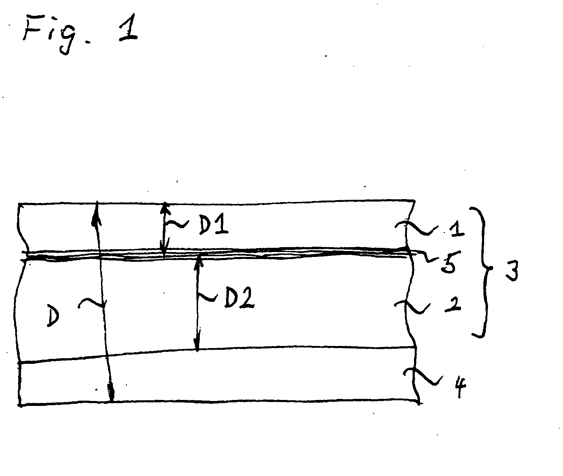

Fig. 1 einen Querschnitt durch ein erfindungsgemäßes Kabelwickelband.

Wie aus Fig. 1 hervorgeht, umfasst ein erfindungsgemäßes Kabelwickelband, insbesondere ein für den Einsatz im Motorenraum eines Automobils bestimmtes Kabelwickelband, einen bandförmigen, als Verbund aus mindestens einer ersten textilen Schicht 1 und aus einer zweiten textilen Schicht 2 ausgebildeten Träger 3.

Die erste textile Schicht 1 des Trägers 3 ist ein Gewebe, welches mindestens 20 Kettfäden je cm und höchstens 22 Schussfäden je cm aufweist. Die zweite textile Schicht 2 ist ein Vliesstoff. Auf mindestens einer Seite des Trägers 3 ist eine selbstklebende Klebeschicht 4 aufgetragen, die aus einem Haftklebstoff besteht.

Das Gewebe des Trägers 3 kann bevorzugt aus einem Garn bestehen, welches aus einem Polyamidwerkstoff, insbesondere aus PA 6.6, aus einem Polyester, insbesondere PET, oder einer Mischung dieser Werkstoffe gebildet ist. Auch das Vlies der zweiten textilen Schicht 2 kann aus diesen Werkstoffen aufgebaut sein.

Das Garn des Gewebes der ersten textilen Schicht 1 weist dabei eine Garnstärke von mindestens 150 dtex, beispielsweise von 167 dtex, auf. Das Garn ist aus 30 bis 50, beispielsweise 36 oder 48, Filamenten aufgebaut . Dabei sollten keine Stapelfasern verwendet werden.

Wie bereits erwähnt, ist als Vlies der zweiten textilen Schicht 2 ein Nähvlies einzusetzen.

Dabei sollte das zum Übernähen verwendete Garn eine Garnstärke von etwa 50 bis 100 dtex aufweisen. Es ist dabei - wie bereits erwähnt - auch von besonderem Vorteil, wenn in dem Nähvlies der zweiten textilen Schicht 2 eine Anzahl von 7 bis 22 Fäden je 25 mm, vorzugsweise von 14 Fäden je 25 mm, vorgesehen ist.

Um die beiden textilen Schichten 1, 2 miteinander zu verbinden, wird ein Acrylatklebstoff, insbesondere ein UV-vernetzbarer Acrylatklebstoff, eingesetzt werden, mittels dessen eine Kaschierung der ersten textilen Trägerschicht 1 auf die zweite textile Trägerschicht 2 herbeigeführt wird. Dies wird in der Zeichnung durch die mit dem Bezugszeichen 5 bezeichnete Schicht veranschaulicht.

Das erfindungsgemäße Kabelwickelband erfüllt sowohl an einem Dorn mit 5 mm Durchmesser, als auch an einem Dorn mit 10 mm Durchmesser die Abriebklasse E gemäß LV 312. Diese Einordnung wird üblicherweise auch mit "Abriebklasse E/E" bezeichnet.

Das Kabelwickelband weist eine Dicke auf, die mit dem Bezugszeichen D bezeichnet ist und die sich summarisch aus den Einzelschichtdicken des Verbundes, insbesondere den Schichtdicken D1, D2 der ersten und zweiten textilen Schicht 1, 2, ergibt. Die Dicke D kann bevorzugt im Bereich von 0,80 bis 1,60 mm, insbesondere im Bereich von 1,10 bis 1,30 mm liegen.

Das Gewebe der ersten textilen Schicht 1 kann dabei mit Vorteil ein Flächengewicht von 90 bis 250 g/m², vorzugsweise von 120 bis 140 g/m², aufweisen, während für das Vlies der zweiten textilen Schicht 2 ein Flächengewicht von 200 bis 250 g/m²vorgesehen ist. Der Haftklebstoff in der Klebeschicht 4 sollte ein spezifisches Flächengewicht von etwa 60 bis 150 g/m², vorzugsweise von etwa 95 bis 105 g/m², aufweisen.

Im Speziellen wurde als Ausführungsbeispiel ein Kabelwickelband hergestellt, dessen Träger 1 die nachstehend in Tabelle 2 wiedergegebene Gewebekonstruktion und den in Tabelle 3 wiedergegebenen Vliesaufbau aufwies.

Der Träger 3 wurde auf einer Seite mit ca. 100 g/m² eines UV-vernetzenden Acrylatklebstoffs beschichtet. Das Acrylat wurde zur Bildung der Klebebeschichtung 4 vernetzt und das Material auf sich selbst gewickelt. Anschließend wurde die so gebildete Rolle in gewünschter Weise als auf sich selbst gewickeltes Klebeband konfektioniert.

**Tabelle 2: Gewebekonstruktion**

| Parameter | Einheit | Größe |
|---|---|---|
| Trägermaterial | | PET-Gewebe |
| Garnart | | PET |
| Flächengewicht | g/m² | 130 |
| Ganggewicht Kette | dtex | 167 |
| Ganggewicht Schuss | dtex | 167 |
| Filamentanzahl im Kettfaden | | 36 oder 48 |
| Filamentanzahl im Schussfaden | | 36 oder 48 |
| Anzahl Fäden Kette | 1/cm | 45 |
| Anzahl Fäden Schuss | 1/cm | 25 |

**Tabelle 3: Vlieskonstruktion**

| Parameter | Einheit | Größe |
|---|---|---|
| Trägermaterial | | PET-Nähvlies Typ Maliwatt |
| Garnart | | PET |
| Flächengewicht | g/m² | 180 - 280 (200 - 250) |
| Ganggewicht Kette | dtex | 50 - 100 |
| Flockenmaterial | | PET |
| Teilung des Vlieses Anzahl der Nähfäden | 1 / 25 mm | 7 - 22 (14) |

Das so hergestellte Band verfügte neben den hohen Werten der Abriebbeständigkeit - Zyklenzahl mit 5-mm-Dorn 15422 Hübe, mit 10-mm-Dorn 35568 Hübe - über eine sehr gute Temperaturstabilität (3000 h bei 125 °C bzw. 150 °C bei Einsatz von spinndüsengefärbten Textilien nach LV 312), war manuell und maschinell verarbeitbar, schmiegsam, geräuschdämpfend und zeigte bei der Verarbeitung kein Flagging. Die Abriebbeständigkeit entsprach somit der Höchstklasse E/E nach LV 312.

In Tabelle 4 sind die Basisdaten eines Kabelwickelbandes (Band A) mit ihren möglichen bzw. jeweilig bevorzugten Variationsbereichen angegeben.

Die Ermittlung der angegebenen technischen Parameter erfolgt dabei nach den jeweils üblichen Normen: EN ISO 2286-1 für das spezifische Gewicht des Trägers 1, DIN EN 1942 für die Dicke D, DIN EN 14410 für die mechanischen Werte und DIN EN 1939 für die Klebkraft und DIN EN 1944 für die Abrollkraft des Klebebandes. Das Flaggingverhalten ist nach LV 312 zu bestimmen.

**Tabelle 4: Basisdaten eines Kabelwickelbandes (Band A)**

| Eigenschaft | Einheit | Größe |
|---|---|---|
| Banddicke | mm | 1,1 - 1,3 |
| Mechanische Werte Reißdehnung Reißfestigkeit | % N/cm | 35 - 40 200 - 450 |
| Klebkraft auf Stahl auf Bandrücken | N/cm N/cm | 5 - 8 4 - 7 |
| Abrollkraft | N/19 mm | 3 - 6 |
| Flagging 30 min, 24 h | - | kein Flagging |

Tabelle 5 gibt neben einem Vergleich der Abriebdaten eines Kabelwickelbandes (Band A) mit denen eines nicht mit einem Träger-Verbundmaterial ausgebildeten PET-Gewebe-Kabelwickelbandes von 0,3 mm Dicke (Band B) auch den Vergleich mit den Abriebdaten eines Polyamid-Velours-Kabelwickelbandes von 1,2 mm Dicke (Band C) und eines eingangs genannten hochabriebfesten Bandes von 1,8 mm Dicke der Fa. Hänsel Verbundtechnik GmbH & Co. KG (Band D) wieder. Bei dem Band D handelt es sich dabei um ein Verbundmaterial aus einem PA-Velours, einer PET-Folie und einem PET-Vlies.

Die nachstehende Tabelle 5 veranschaulicht dabei insbesondere die extrem hohe Abriebbeständigkeit des Kabelwickelbandes (Band A), die von einem PET-Gewebe-Kabelwickelband (Band B) gar nicht und den aufgeführten Velours- bzw. Verbund-Kabelwickelbändern (Bänder C und D) zwar erreicht wird, aber nur auf Kosten eines höheren Fertigungsaufwandes und daraus resultierenden höheren Kosten.

**Tabelle 5: Vergleich der Abriebdaten verschiedener Kabelwickelbänder**

| Probe | 5 mm Dorn | 10 mm Dorn |
|---|---|---|
| B | 500 - 700 Klasse C | 1800 - 2200 Klasse D |
| C | 3500 - 5500 Klasse D | 9000 - 13000 Klasse E |
| D | 8058 - 11282 Klasse E | 26000 - 30055 Klasse E |
| A | 15422 Klasse E | 35568 Klasse E |

Das im vorstehenden Beispiel aufgeführte Band A ist nicht erfindungsgemäß.

### Bezugszeichen

- 1: erste textile Schicht von 3
- 2: zweite textile Schicht von 3
- 3: Träger
- 4: Klebeschicht
- 5: Kaschierung

- D: Banddicke
- D1: Dicke von 1
- D2: Dicke von 2

## Patentansprüche

1. Kabelwickelband, insbesondere für den Motorenraum eines Automobils, mit einem bandförmigen, als Verbund aus mindestens einer ersten textilen Schicht (1) und aus einer zweiten textilen Schicht (2) ausgebildeten Träger (3), wobei die erste textile Schicht (1) ein Gewebe und die zweite textile Schicht (2) ein Vliesstoff ist, und mit mindestens auf einer Seite des Trägers (3) aufgetragenen selbstklebenden Klebeschicht (4), die aus einem Haftklebstoff besteht, wobei ein die erste textile Schicht (1) bildendes Garn eine Garnstärke von mindestens 150 dtex aufweist und aus 30 bis 50 Filamenten aufgebaut ist, wobei das Vlies der zweiten textilen Schicht (2) ein Nähvlies mit einem Flächengewicht im Bereich von 200 bis 250 g/m² ist, wobei die beiden textilen Schichten (1, 2) durch einen Acrylatklebstoff miteinander verbunden sind, mittels dessen eine Kaschierung (5) der ersten textilen Trägerschicht (1) auf die zweite textile Trägerschicht (2) herbeigeführt ist, wobei das Kabelwickelband sowohl an einem Dorn mit 5 mm Durchmesser, als auch an einem Dom mit 10 mm Durchmesser die Abriebklasse E gemäß LV 312 erfüllt, wobei das Gewebe der ersten textilen Schicht (1) mindestens 20 Kettfäden je cm und höchstens 22 Schussfäden je cm aufweist.

2. Kabelwickelband nach Anspruch 1,
**dadurch gekennzeichnet, dass** ein das Gewebe der ersten textilen Schicht (1) bildendes Garn aus 36 bis 48 Filamenten, aufgebaut ist.

3. Kabelwickelband nach einem der Ansprüche 1 oder 2,
**dadurch gekennzeichnet, dass** in dem Nähvlies der zweiten textilen Schicht (2) das Garn eine Garnstärke von 50 bis 100 dtex aufweist.

4. Kabelwickelband nach einem der Ansprüche 1 bis 3,
**dadurch gekennzeichnet, dass** in dem Nähvlies der zweiten textilen Schicht (2) eine Anzahl von 7 bis 22 Fäden je 25 mm, vorzugsweise von 14 Fäden je 25 mm, vorgesehen ist.

5. Kabelwickelband nach einem der Ansprüche 1 bis 4,
**dadurch gekennzeichnet, dass** das Gewebe der ersten textilen Schicht (1) und/oder das Vlies der zweiten textilen Schicht (2) aus einem Polyamidwerkstoff (PA) und/oder einem Polyesterwerkstoff (PET) gebildet ist.

6. Kabelwickelband nach einem der Ansprüche 1 bis 5,
**gekennzeichnet durch** eine Dicke (D) im Bereich von 0,80 bis 1,60 mm, insbesondere im Bereich von 1,10 bis 1,30 mm.

7. Kabelwickelband nach einem der Ansprüche 1 bis 6,
**dadurch gekennzeichnet, dass** das Gewebe der ersten textilen Schicht (1) ein Flächengewicht von 90 bis 250 g/m², vorzugsweise von 120 bis 140 g/m², aufweist.

8. Kabelwickelband nach einem der Ansprüche 1 bis 7,
**gekennzeichnet durch** eine Reißdehnung im Bereich von 35 bis 40 %.

9. Kabelwickelband nach einem der Ansprüche 1 bis 8,
**gekennzeichnet durch** eine Reißfestigkeit im Bereich von 200 bis 450 N/cm.

10. Kabelwickelband nach einem der Ansprüche 1 bis 9,
**dadurch gekennzeichnet, dass** der Haftklebstoff der selbstklebenden Klebeschicht (4) ein Acrylatklebstoff, insbesondere ein UV-vernetzbarer Acrylatklebstoff, ist.

11. Kabelwickelband nach einem der Ansprüche 1 bis 10,
**dadurch gekennzeichnet, dass** der Haftklebstoff in der Klebeschicht (4) mit einem spezifischen Flächengewicht von etwa 60 bis 150 g/m², vorzugsweise von etwa 95 bis 105 g/m², aufgetragen ist.

12. Kabelwickelband nach einem der Ansprüche 1 bis 11,
**dadurch gekennzeichnet, dass** die Klebkraft auf dem Bandrücken im Bereich von 4 bis 7 N/cm liegt.

13. Kabelwickelband nach einem der Ansprüche 1 bis 12,
**dadurch gekennzeichnet, dass** die Klebkraft auf Stahl im Bereich von 5 bis 8 N/cm liegt.

14. Kabelwickelband nach einem der Ansprüche 1 bis 13,
**dadurch gekennzeichnet, dass** die Abrollkraft im Bereich von 3 bis 6 N / 19 mm liegt.

## Claims

1. A cable wrapping tape, in particular for the engine compartment of an automobile, with a strip-shaped backing (3) formed as a composite consisting of at least a first textile layer (1) and of a second textile layer (2), the first textile layer (1) being a woven fabric and the second textile layer (2) being a non-woven fabric, and with [a] self-adhesive adhesive layer (4) applied at least on one side of the backing (3), which layer consists of a pressure-sensitive adhesive, a yarn forming the first textile layer (1) having a yarn thickness of at least 150 dtex and being constructed from 30 to 50 filaments, the non-woven fabric of the second textile layer (2) being a stitched non-woven with a weight per unit area in the range from 200 to 250 g/m², the two textile layers (1, 2) being joined together by an acrylate adhesive, by means of which lamination (5) of the first textile backing layer (1) on the second textile backing layer (2) is brought about, the cable wrapping tape satisfying abrasion class E according to LV 312 both on a mandrel with a diameter of 5 mm and on a mandrel with a diameter of 10 mm, the woven fabric of the first textile layer (1) has at least 20 warp threads per cm and at most 22 weft threads per cm.

2. A cable wrapping tape according to Claim 1, **characterised in that** a yarn forming the woven fabric of the first textile layer (1) is constructed from 36 to 48 filaments.

3. A cable wrapping tape according to Claim 1 or 2, **characterised in that** the yarn has a yarn thickness of 50 to 100 dtex in the stitched non-woven of the second textile layer (2).

4. A cable wrapping tape according to one of Claims 1 to 3, **characterised in that** a number from 7 to 22 threads per 25 mm, preferably of 14 threads per 25 mm, is provided in the stitched non-woven of the second textile layer (2).

5. A cable wrapping tape according to one of Claims 1 to 4, **characterised in that** the woven fabric of the first textile layer (1) and/or the non-woven fabric of the second textile layer (2) is formed from a polyamide material (PA) and/or a polyester material (PET).

6. A cable wrapping tape according to one of Claims 1 to 5, **characterised by** a thickness (D) in the range from 0.80 to 1.60 mm, in particular in the range from 1.10 to 1.30 mm.

7. A cable wrapping tape according to one of Claims 1 to 6, **characterised in that** the woven fabric of the first textile layer (1) has a weight per unit area of 90 to 250 g/m², preferably of 120 to 140 g/m².

8. A cable wrapping tape according to one of Claims 1 to 7, **characterised by** an elongation at tear in the range from 35 to 40%.

9. A cable wrapping tape according to one of Claims 1 to 8, **characterised by** a tear strength in the range from 200 to 450 N/cm.

10. A cable wrapping tape according to one of Claims 1 to 9, **characterised in that** the pressure-sensitive adhesive of the self-adhesive adhesive layer (4) is an acrylate adhesive, in particular a UV-cross-linkable acrylate adhesive.

11. A cable wrapping tape according to one of Claims 1 to 10, **characterised in that** the pressure-sensitive adhesive in the adhesive layer (4) is applied with a specific weight per unit area of approximately 60 to 150 g/m², preferably of approximately 95 to 105 g/m².

12. A cable wrapping tape according to one of Claims 1 to 11, **characterised in that** the adhesive force on the back of the tape lies in the range from 4 to 7 N/cm.

13. A cable wrapping tape according to one of Claims 1 to 12, **characterised in that** the adhesive force on steel lies in the range from 5 to 8 N/cm.

14. A cable wrapping tape according to one of Claims 1 to 13, **characterised in that** the unwinding force lies in the range from 3 to 6 N/19 mm.

## Revendications

1. Ruban pour ligaturer des câbles, en particulier pour le compartiment moteur d'une automobile, avec un support (3) en forme de ruban, configuré comme composite en au moins une première couche textile (1) et en une deuxième couche textile (2), sachant que la première couche textile (1) est un tissu et que la deuxième couche textile (2) est un non-tissé, et avec une couche autocollante (4) appliquée au moins sur une face du support (3), qui consiste en une colle adhésive, sachant qu'un fil formant la première couche textile (1) présente une épaisseur d'au moins 150 dtex et est constitué de 30 à 50 filaments, le non-tissé de la deuxième couche textile (2) étant un non-tissé cousu avec un poids surfacique dans l'intervalle de 200 à 250 g/m², les deux couches textiles (1, 2) étant assemblées par une colle acrylique, au moyen de laquelle un contre-collage (5) de la première couche porteuse textile (1) sur la deuxième couche porteuse textile (2) est provoqué, sachant que le ruban pour ligaturer des câbles satisfait à la classe d'usure E selon LV 312, aussi bien sur un mandrin de 5 mm de diamètre que sur un mandrin de 10 mm de diamètre, le tissu de la première couche textile (1) comporte au moins 20 fils de chaîne par cm et au plus 22 fils de trame par cm.

2. Ruban pour ligaturer des câbles selon la revendication 1,
**caractérisé en ce qu'**un fil formant le tissu de la première couche textile (1) est constitué de 36 à 48 filaments.

3. Ruban pour ligaturer des câbles selon la revendication 1 ou 2,
**caractérisé en ce que** dans le non-tissé cousu de la deuxième couche textile (2), le fil présente une épaisseur de fil de 50 à 100 dtex.

4. Ruban pour ligaturer des câbles selon l'une quelconque des revendications 1 à 3,
**caractérisé en ce que** dans le non-tissé cousu de la deuxième couche textile (2), il est prévu un nombre de 7 à 22 fils par 25 mm, de préférence de 14 fils par 25 mm.

5. Ruban pour ligaturer des câbles selon l'une quelconque des revendications 1 à 4,
**caractérisé en ce que** le tissu de la première couche textile (1) et/ou le non-tissé de la deuxième couche textile (2) sont formés en un matériau polyamide (PA) et/ou en un matériau polyester (PET).

6. Ruban pour ligaturer des câbles selon l'une quelconque des revendications 1 à 5,
**caractérisé par** une épaisseur (D) dans l'intervalle de 0,80 à 1,60 mm, en particulier dans l'intervalle de 1,10 à 1,30 mm.

7. Ruban pour ligaturer des câbles selon l'une quelconque des revendications 1 à 6,
**caractérisé en ce que** le tissu de la première couche textile (1) présente un poids surfacique de 90 à 250 g/m², de préférence de 120 à 140 g/m².

8. Ruban pour ligaturer des câbles selon l'une quelconque des revendications 1 à 7,
**caractérisé par** un allongement à la rupture dans l'intervalle de 35 à 40 %.

9. Ruban pour ligaturer des câbles selon l'une quelconque des revendications 1 à 8,
**caractérisé par** une résistance à la traction dans l'intervalle de 200 à 450 N/cm.

10. Ruban pour ligaturer des câbles selon l'une quelconque des revendications 1 à 9,
**caractérisé en ce que** la colle adhésive de la couche autocollante (4) est une colle acrylique, en particulier une colle acrylique réticulable aux UV.

11. Ruban pour ligaturer des câbles selon l'une quelconque des revendications 1 à 10,
**caractérisé en ce que** la colle adhésive dans la couche de colle (4) est appliquée avec un poids spécifique d'environ 60 à 150 g/m², de préférence d'environ 95 à105 g/m².

12. Ruban pour ligaturer des câbles selon l'une quelconque des revendications 1 à 11,
**caractérisé en ce que** la force de collage sur le dos du ruban est comprise dans l'intervalle de 4 à 7 N/cm.

13. Ruban pour ligaturer des câbles selon l'une quelconque des revendications 1 à 12,
**caractérisé en ce que** la force de collage sur de l'acier est comprise dans l'intervalle de 5 à 8 N/cm.

14. Ruban pour ligaturer des câbles selon l'une quelconque des revendications 1 à 13,
**caractérisé en ce que** la force de débobinage est comprise dans l'intervalle de 3 à 6 N/19 mm.
